# EUROPÄISCHE PATENTSCHRIFT

(11) **EP 1 661 847 B1**
(45) Veröffentlichungstag und Bekanntmachung des Hinweises auf die Patenterteilung: **18.06.2008**
(21) Anmeldenummer: 05024302.1
(22) Anmeldetag: 08.11.2005
(51) Int. Cl.: B66F 9/06, B66F 9/10

(54) **Flurförderzeug mit einer bewegbaren Aufstandsfläche für einen Batterieblock**
Industrial truck with movable resting surface for a battery block
Chariot élévateur avec une surface mobile de support d'un bloc de batterie

(30) Priorität: 24.11.2004 DE 102004056624
(43) Veröffentlichungstag der Anmeldung: 31.05.2006
(73) Patentinhaber: STILL GMBH, 22113 Hamburg (DE)
(72) Erfinder: Lundelius, Jens, 22929 Schönberg (DE)
(74) Vertreter: Geirhos, Johann

(56) Entgegenhaltungen:
- DE-A1- 10 240 854
- DE-A1- 10 241 418
- GB-A- 2 091 179
- US-A- 3 838 745
- PATENT ABSTRACTS OF JAPAN Bd. 1996, Nr. 10, 31. Oktober 1996 (1996-10-31) -& JP 08 165094 A (NIPPON YUSOKI CO LTD), 25. Juni 1996 (1996-06-25)

## Beschreibung

Die Erfindung betrifft ein Flurförderzeug, insbesondere Gegengewichtsgabelstapler, mit einem innerhalb eines Fahrzeugrahmens angeordneten Batterieblock, der zum Durchführen eines Batteriewechsels relativ zum Fahrzeugrahmen in horizontaler Richtung bewegbar ist.

Flurförderzeuge mit einer seitlichen Batterieentnahmeöffnung sind häufig mit einer Rollenbahn ausgerüstet, auf der ein Batterieblock mit relativ geringem Kraftaufwand verschoben werden kann. Um den Batterieblock vollständig aus dem Batteriefach heraus bewegen zu können, wird bei Flurförderzeugen des Standes der Technik neben dem Flurförderzeug eine externe Rollenbahn angeordnet, die dann an die zu dem Flurförderzeug gehörende Rollenbahn anschließt. Alternativ ist es bekannt, die in dem Flurförderzeug angeordnete Rollenbahn ausziehbar zu gestalten. Zur Durchführung eines Batteriewechsels wird dabei zuerst die Rollenbahn ausgezogen und anschließend wird der Batterieblock auf der ausgezogenen Rollenbahn vollständig aus dem Batteriefach heraus bewegt. Eine solche Anordnung ist beispielsweise in der DE 102 41 418 A1 beschrieben. Der vollständig aus dem Batteriefach des Flurförderzeugs heraus bewegte Batterieblock kann dann beispielsweise mit einem Hallenkran angehoben und weiter transportiert werden. Ein Einsetzen eines neuen Batterieblocks in das Flurförderzeug erfolgt in umgekehrter Reihenfolge.

Der vorliegenden Erfindung liegt die Aufgabe zugrunde, ein Flurförderzeug mit einer anderen, einfach aufgebauten und sicheren Vorrichtung zur seitlichen Batterieentnahme zur Verfügung zu stellen.

Diese Aufgabe wird erfindungsgemäß dadurch gelöst, dass dass das Flurförderzeug eine in horizontaler Richtung verschiebbare, an dem Fahrzeugrahmen geführte, von einem plattenförmigen Bauteil gebildete Aufstandsfläche aufweist, auf der der Batterieblock steht. Der Batterieblock steht auf der Aufstandsfläche und kann gemeinsam mit der Aufstandsfläche in horizontaler Richtung aus dem Batteriefach heraus oder in das Batteriefach hinein bewegt werden. Eine Relativbewegung zwischen Batterieblock und Aufstandsfläche findet dabei nicht statt.

Vorteilhafterweise ist die Aufstandsfläche vollständig aus dem Flurförderzeug heraus bewegbar. Wenn sich die Aufstandsfläche vollständig außerhalb des Flurförderzeugs befindet, ist auch der Batterieblock vollständig außerhalb des Flurförderzeugs angeordnet und kann dann beispielsweise mit einem Kran senkrecht angehoben werden.

Um zu erreichen, dass der Batterieblock bei eingefahrener Aufstandsfläche vollständig innerhalb des Flurförderzeugs und bei ausgefahrener Aufstandsfläche vollständig außerhalb des Flurförderzeugs angeordnet ist, ist der Bewegungsweg der Aufstandsfläche größer ist als die Erstreckung des Batterieblocks in Bewegungsrichtung der Aufstandsfläche.

Vorzugsweise ist der maximale Bewegungsweg der Aufstandsfläche um mindestens 50 Millimeter, vorzugsweise um mindestens 80 Millimeter größer als die Erstreckung des Batterieblocks in Bewegungsrichtung der Aufstandsfläche.

Gemäß einer zweckmäßigen Ausgestaltung der Erfindung ist zur Führung der Aufstandsfläche mindestens ein sich in horizontaler Richtung erstreckender Rollenträger vorgesehen, an dem mehrere Rollen drehbar gelagert sind. Die Rollen des Rollenträgers ermöglichen die horizontale Beweglichkeit der Aufstandsfläche und dienen gleichzeitig zur Führung der Aufstandsfläche.

Hierfür ist der Rollenträger mittels der Rollen in mindestens einer an dem Fahrzeugrahmen angeordneten Führungsschiene bewegbar geführt. Die Führungsschiene ist direkt oder indirekt an dem Fahrzeugrahmen, also dem tragenden Bauteil des Flurförderzeugs befestigt. Die Rollen des Rollenträgers sind in dieser Führungsschiene bewegbar geführt.

Weiter weist die Aufstandsfläche mindestens eine Führungsschiene auf, mit der die Aufstandsfläche an den Rollen des Rollenträgers bewegbar geführt ist. Die Führungsschiene der Aufstandsfläche kann damit relativ zum Rollenträger in horizontaler Richtung bewegt werden. Die auf die Aufstandsfläche wirkenden Kräfte werden - soweit sie nicht über die Stütze an der Fahrbahn abgestützt werden - über den Rollenträger in den Fahrzeugrahmen des Flurförderzeugs eingeleitet.

Gemäß einer Weiterbildung der Erfindung weist die Aufstandsfläche und/oder der Rollenträger eine ausfahrbare Stütze auf, mit der die ausgefahrene Aufstandsfläche gegenüber einer Fahrbahn abstützbar ist. Die Stütze verhindert ein Umkippen des Flurförderzeugs infolge der Gewichtskraft des Batterieblocks, wenn sich der Batterieblock auf der ausgefahrenen Aufstandsfläche neben dem Batteriefach befindet. Während sich die Aufstandsfläche innerhalb des Batteriefachs befindet, ist die Stütze eingefahren und benötigt dabei nur wenig Bauraum in vertikaler Richtung. Wenn sich die Aufstandsfläche hingegen außerhalb des Batteriefachs befindet, ist die Stütze ausgefahren stützt die Aufstandsfläche nach unten an der Fahrbahn ab.

Mit besonderem Vorteil weist die Stütze mindestens eine Stützrolle auf, die während des Bewegens der Aufstandsfläche auf der Fahrbahn abrollt. Die mit der Stützrolle ausgerüstete Stütze ermöglicht ein Abstützen der Aufstandsfläche während der horizontalen Bewegung der Aufstandsfläche, wenn sich die Stütze außerhalb des Batteriefachs befindet. Solange sich die Stütze innerhalb des Batteriefachs befindet, befindet sich auch der Schwerpunkt des Batterieblocks innerhalb des Batteriefachs und eine Abstützung an der Fahrbahn ist nicht erforderlich. Während des Bewegens der Aufstandsfläche mit ausgefahrener Stütze bleibt die Position der Stütze relativ zur Aufstandsfläche unverändert.

Weitere Vorteile und Einzelheiten der Erfindung werden anhand des in den schematischen Figuren dargestellten Ausführungsbeispiels näher erläutert. Dabei zeigt
- Figur 1: ein erfindungsgemäßes Flurförderzeug in Seitenansicht,
- Figur 2: ein Batteriefach mit ausgefahrener Aufstandsfläche in Draufsicht.

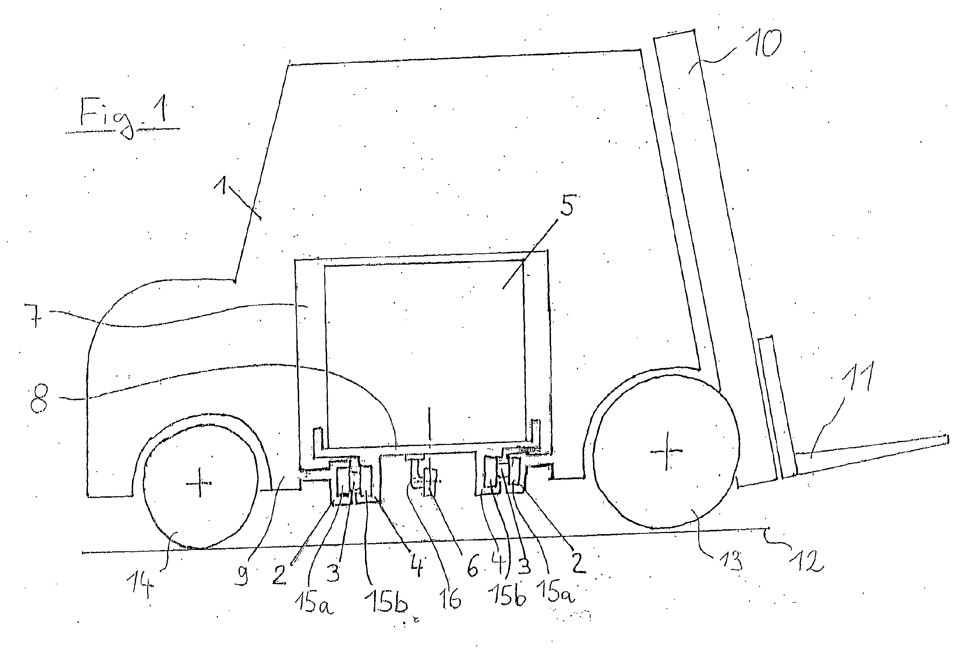

Figur 1 zeigt ein von einem Gegengewichtsgabelstapler 1 gebildetes erfindungsgemäßes Flurförderzeug in Seitenansicht. Am vorderen Ende weist der Gegengewichtsgabelstapler 1 ein teleskopisch ausfahrbares Hubgerüst 10 und ein daran in vertikaler Richtung bewegbar geführtes Lastaufnahmemittel 11 auf. Auf einer Fahrbahn 12 steht der Gegengewichtsgabelstapler 1 mit zwei Vorderrädern 13 und zwei Hinterrädern 14 auf.

In einem zur Seite des Gegengewichtsgabelstaplers 1 offenen Batteriefach 7 befindet sich ein Batterieblock 5, der zur Versorgung der elektrischen Aggregate, insbesondere des Fahr- und des Hubantriebs des Gegengewichtsgabelstaplers 1 mit elektrischer Energie dient. Der Batterieblock 5 kann in Querrichtung des Gegengewichtsgabelstaplers 1 - in der vorliegenden Darstellung also in Richtung senkrecht zur Zeichenebene - aus dem Batteriefach 7 entnommen werden.

Die horizontale Verschiebbarkeit des Batterieblocks 5 wird erfindungsgemäß dadurch ermöglicht, dass der Batterieblock 5 auf einer verschiebbaren Aufstandsfläche 8 steht. Zur verschiebbaren Lagerung der Aufstandsfläche 8 ist eine Führung vorgesehen, die eine horizontale Bewegung in Querrichtung des Gegengewichtsgabelstaplers 1 ermöglicht. Die Führung umfasst im vorliegenden Ausführungsbeispiel zwei an einem Fahrzeugrahmen 9 des Gegengewichtsgabelstaplers 1 befestigte Führungsschienen 2, zwei an der Aufstandsfläche 8 befestigte Führungsschienen 4 und zwei Rollenträger 3 mit Rollen 15a, 15b. Hierbei sind die äußeren Rollen 15a des Rollenträgers in den Führungsschienen 2 am Fahrzeugrahmen 9 geführt, während die inneren Rollen 15 in den Führungsschienen 4 an der Aufstandsfläche 8 geführt sind.

Weiter weist die Aufstandsfläche 8 eine ausfahrbare Stütze 16 mit einer Stützrolle 6 auf. Wenn sich die Aufstandsfläche 8 innerhalb des Gegengewichtsgabelstaplers 1 befindet, ist die Stütze 16 nach oben geklappt und benötigt damit nur wenig Bauraum in vertikaler Richtung. Wenn die Aufstandsfläche 8 hingegen so weit ausgezogen ist, dass sich die Stütze 16 außerhalb des Gegengewichtsgabelstaplers 1 befindet, kann die Stütze 16 herunter geklappt und verriegelt werden, sodass die Stützrolle 6 auf der Fahrbahn 12 abrollt und die Gewichtskraft des Batterieblocks 5 zumindest teilweise über die Stütze 16 und die Stützrolle 6 an der Fahrbahn 12 abgestützt wird. Hierdurch wird insbesondere dann, wenn sich der Schwerpunkt des Batterieblocks 5 außerhalb des Gegengewichtsgabelstaplers befindet, ein Umkippen des Gegengewichtsgabelstaplers 1 verhindert.

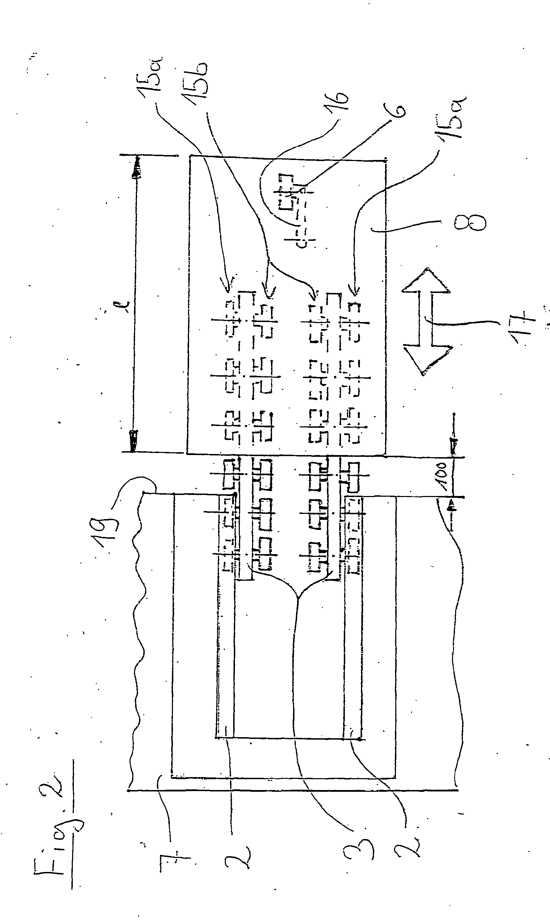

In Figur 2 ist das Batteriefach 7 mit ausgefahrener Aufstandsfläche 8 in Draufsicht dargestellt. Zu erkennen sind weiter die Rollenträger 3 mit den Rollen 15a und 15b sowie die Führungsschienen 2 für die Rollen 15a. Die mit diesen Bauteilen realisierte Führung der Aufstandsfläche 8 ermöglicht eine horizontale Bewegung der Aufstandsfläche 6 in Querrichtung 17 des Gegengewichtsgabelstaplers 1, wobei sich der Rollenträger 3 ebenfalls in Richtung 17 bewegt. In der dargestellten, vollständig ausgefahrenen Position der Aufstandsfläche 8 befinden sich noch zwei Rollenpaare 15a innerhalb der Führungsschienen 2, sodass von dem Rollenträger 3 auf die Führungsschienen 2 ein Drehmoment übertragen werden kann und damit ein Abkippen der Aufstandsfläche 8 verhindert ist. Teilweise werden die Gewichtskräfte der Aufstandsfläche 8 und des darauf befindlichen Batterieblocks jedoch auch direkt über die Stütze 16 und die Stützrolle 6 auf der Fahrbahn abgestützt.

In der dargestellten, ausgefahrenen Position befindet sich die Aufstandsfläche 8 deutlich außerhalb des Batteriefachs und ist ca. 100 Millimeter von einer Seitenwand 19 des Gegengewichtsgabelstaplers beabstandet. Der maximale Bewegungsweg der Aufstandsfläche 8 ist damit um 100 Millimeter länger als die Länge I der Aufstandsfläche, die der Länge des Batterieblocks entspricht. Die ausgefahrene Aufstandsfläche 8 ist damit von oben frei zugänglich, sodass der Batterieblock beispielsweise mittels eines Krans oder mittels eines weiteren Gabelstaplers auf der Aufstandsfläche 8 abgestellt oder von der Aufstandsfläche 8 abgehoben werden kann.

## Patentansprüche

1. Flurförderzeug, insbesondere Gegengewichtsgabelstapler (1), mit einem innerhalb eines Fahrzeugrahmens (9) angeordneten Batterieblock (5), der zum Durchführen eines Batteriewechsels relativ zum Fahrzeugrahmen (9) in horizontaler Richtung bewegbar ist, **dadurch gekennzeichnet, dass** das Flurförderzeug eine in horizontaler Richtung verschiebbare, an dem Fahrzeugrahmen (9) geführte, von einem plattenförmigen Bauteil gebildete Aufstandsfläche (8) aufweist, auf der der Batterieblock (5) steht.

2. Flurförderzeug nach Anspruch 1, **dadurch gekennzeichnet, dass** die Aufstandsfläche (8) vollständig aus dem Flurförderzeug heraus bewegbar ist.

3. Flurförderzeug nach Anspruch 1 oder 2, **dadurch gekennzeichnet, dass** der maximale Bewegungsweg der Aufstandsfläche (8) größer ist als die Erstreckung des Batterieblocks (5) in Bewegungsrichtung der Aufstandsfläche (8).

4. Flurförderzeug nach Anspruch 3, **dadurch gekennzeichnet, dass** der maximale Bewegungsweg der Aufstandsfläche (8) um mindestens 50 Millimeter, vorzugsweise um mindestens 80 Millimeter größer ist als die Erstreckung des Batterieblocks (5) in Bewegungsrichtung der Aufstandsfläche (8).

5. Flurförderzeug nach einem der Ansprüche 1 bis 4, **dadurch gekennzeichnet, dass** zur Führung der Aufstandsfläche (8) mindestens ein sich in horizontaler Richtung erstreckender Rollenträger (3) vorgesehen ist, an dem mehrere Rollen (15a, 15b) drehbar gelagert sind.

6. Flurförderzeug nach Anspruch 5, **dadurch gekennzeichnet, dass** der Rollenträger (3) mittels der Rollen (15a) in mindestens einer an dem Fahrzeugrahmen (9) angeordneten Führungsschiene (2) bewegbar geführt ist.

7. Flurförderzeug nach Anspruch 5 oder 6, **dadurch gekennzeichnet, dass** die Aufstandsfläche (8) mindestens eine Führungsschiene (4) aufweist, mit der die Aufstandsfläche (8) an den Rollen (15b) des Rollenträgers (3) bewegbar geführt ist.

8. Flurförderzeug nach einem der Ansprüche 1 bis 7, **dadurch gekennzeichnet, dass** die Aufstandsfläche (8) und/oder der Rollenträger (3) eine ausfahrbare Stütze (16) aufweist, mit der die ausgefahrene Aufstandsfläche (8) gegenüber einer Fahrbahn (12) abstützbar ist.

9. Flurförderzeug nach Anspruch 8, **dadurch gekennzeichnet, dass** die Stütze (16) mindestens eine Stützrolle (6) aufweist, die während des Bewegens der Aufstandsfläche (8) auf der Fahrbahn (12) abrollt.

## Claims

1. Industrial truck, in particular counterbalance fork-lift truck (1), comprising a battery block (5) which is arranged inside the vehicle frame (9) and can be moved in the horizontal direction relative to the vehicle frame (9) to carry out a battery change, **characterised in that** the industrial truck has a resting surface (8) which can be displaced in the horizontal direction, guided on the vehicle frame (9) and formed by a plate-shaped component, on which resting surface the battery block (5) stands.

2. Industrial truck according to claim 1, **characterised in that** the resting surface (8) can be moved completely out of the industrial truck.

3. Industrial truck according to claim 1 or 2, **characterised in that** the maximum movement path of the resting surface (8) is greater than the extent of the battery block (5) in the movement direction of the resting surface (8).

4. Industrial truck according to claim 3, **characterised in that** the maximum movement path of the resting surface (8) is greater by at least 50 millimetres, preferably by at least 80 millimetres than the extent of the battery block (5) in the movement direction of the resting surface (8).

5. Industrial truck according to any one of claims 1 to 4, **characterised in that**, to guide the resting surface (8), at least one roller carrier (3) extending in the horizontal direction is provided, on which a plurality of rollers (15a, 15b) are rotatably mounted.

6. Industrial truck according to claims 5, **characterised in that** the roller carrier (3) is movably guided by means of the rollers (15a) in at least one guide rail (2) arranged on the vehicle frame (9).

7. Industrial truck according to claim 5 or 6, **characterised in that** the resting surface (8) has at least one guide rail (4), with which the resting surface (8) can be movably guided on the rollers (15b) of the roller carrier (3).

8. Industrial truck according to any one of claims 1 to 7, **characterised in that** the resting surface (8) and/or the roller carrier (3) has an extendible support (16), with which the extended resting surface (8) can be supported relative to a road (12).

9. Industrial truck according to claim 8, **characterised in that** the support (16) has at least one support roller (6), which rolls on the road (12) during movement of the resting surface (8).

## Revendications

1. Chariot élévateur, notamment chariot élévateur à contrepoids (1) comportant un bloc de batteries (5) installé à l'intérieur du châssis (9) du véhicule, et qui peut être déplacé dans la direction horizontale par rapport au châssis (9) du véhicule, pour effectuer un changement de batteries
**caractérisé en ce que**
le chariot élévateur comporte une surface de support (8) coulissant dans la direction horizontale, guidée par le châssis (9) du véhicule, cette surface de support étant constituée par un composant en forme de plaque, recevant le bloc de batteries.

2. Chariot élévateur selon la revendication 1,
**caractérisé en ce que**
la surface de support (8) peut être dégagée complètement du chariot élévateur.

3. Chariot élévateur selon la revendication 1 ou 2,
**caractérisé en ce que**
la course maximale de la surface de support (8) est supérieure à l'extension du bloc de batteries (5) dans la direction de déplacement de la surface de support (8).

4. Chariot élévateur selon la revendication 3,
**caractérisé en ce que**
la course de déplacement maximale de la surface de support (8) dépasse d'au moins 50 mm et de préférence d'au moins 80 mm l'extension du bloc de batteries (5) dans la direction de déplacement de la surface de support (8).

5. Chariot élévateur selon l'une des revendications 1 à 4,
**caractérisé par**
au moins un support à galets (3) s'étendant dans la direction horizontale pour guider la surface de support (8), le support à galets (3) comportant plusieurs galets (15a, 15b) montés à rotation.

6. Chariot élévateur selon la revendication 5,
**caractérisé en ce que**
le support à galets (3) est guidé de manière mobile à l'aide de galets (15a) dans au moins un rail de guidage (2) prévu sur le châssis (9) du véhicule.

7. Chariot élévateur selon la revendication 5 ou 6,
**caractérisé en ce que**
la surface de support (8) comporte au moins un rail de guidage (4) par lequel la surface de support (8) est guidée de manière mobile sur les galets (15b) du support à galets (3).

8. Chariot élévateur selon l'une des revendications 1 à 7,
**caractérisé en ce que**
la surface de support (8) et/ou le support à galets (3) comportent un appui déployable (16) soutenu par rapport à la surface de circulation (12) par la surface de support (8), déployée.

9. Chariot élévateur selon la revendication 8,
**caractérisé en ce que**
l'appui (16) comporte au moins un galet d'appui (6) roulant sur la surface de circulation ou chaussée (12) pendant le mouvement de la surface de support (8).
